**Europäisches Patentamt**

**European Patent Office**

**Office européen des brevets**

(19)

(11) Veröffentlichungsnummer: **0 316 522 B1**

# EUROPÄISCHE PATENTSCHRIFT

(12)

(45) Veröffentlichungstag der Patentschrift:
**16.10.91 Patentblatt 91/42**

(51) Int. Cl.$^5$: **B23B 31/02**

(21) Anmeldenummer: **88113748.3**

(22) Anmeldetag: **24.08.88**

(54) **Selbstspannendes Bohrfutter.**

(30) Priorität: **19.11.87 DE 3739165**

(43) Veröffentlichungstag der Anmeldung:
**24.05.89 Patentblatt 89/21**

(45) Bekanntmachung des Hinweises auf die
Patenterteilung:
**16.10.91 Patentblatt 91/42**

(84) Benannte Vertragsstaaten:
**CH ES FR GB IT LI NL**

(56) Entgegenhaltungen:
**EP-A- 0 038 103**
**DE-A- 3 305 733**

(56) Entgegenhaltungen:
**DE-B- 1 652 739**
**BEKANNTGEMACHTE UNTERLAGEN DER**
**DEUTSCHEN PATENTANMELDUNG P 5134**
**(18.03.53),VEROEFFENTLICHT 1954**

(73) Patentinhaber: **Röhm, Günter Horst**
**Heinrich-Röhm-Strasse 50**
**W-7927 Sontheim (DE)**

(72) Erfinder: **Röhm, Günter Horst**
**Heinrich-Röhm-Strasse 50**
**W-7927 Sontheim (DE)**

(74) Vertreter: **Fay, Hermann, Dipl.-Phys. Dr. et al**
**Dipl.-Phys. Hermann Fay und Dr. Joachim**
**Dziewior Ensingerstrasse 21 Postfach 17 67**
**W-7900 Ulm/Donau (DE)**

## Beschreibung

Die Erfindung betrifft ein selbstspannendes Bohrfutter mit einem zum Anschluß an eine Bohrspindel eingerichteten Futterkörper, mit einer Spannhülse, die mittels eines Kugellagers drehbar und axial unverschiebbar am Futterkörper gehalten und in einer Zylinderfläche am Futterkörper geführt ist, ferner mit einem Backenhalter und mit in Ausnehmungen des Backenhalters radial und axial verschiebbar angeordneten Spannbacken, die an der radial inneren Kegelfläche einer Kegelhülse geführt sind, welche starr an der Spannhülse angeordnet ist und den sich mit der Spannhülse drehenden Backenhalter aufnimmt, wobei die Spannhülse und die Kegelhülse miteinander einstückig ausgebildet sind und der innerhalb der an der Spannhülse axial über den Futterkörper verlängerten Zylinderfläche liegende Backenhalter gegenüber der Spannhülse und dem Futterkörper axial verschieblich angeordnet und federnd gegen den Futterkörper abgestützt ist.

Bei einem aus der DE-A-3305733 bekannten Bohrfutter dieser Art besitzt der Futterkörper eine zur Bohrspindel hin gewandte Ringschulter, die das Kugellager führt. Auf das Ende der Spannhülse ist ein radial nach innen über die Spannhülse vorstehender Gewindering angeschlossen, der die der Ringschulter axial gegenüber liegende Lauffläche für das Kugellager bildet, so daß die Spannhülse über den Gewindering am Kugellager und damit am Futterkörper abgestützt ist. Nachteilig ist dabei, daß die durch die Einstückigkeit von Spann- und Kegelhülse an sich erreichbare Genauigkeit der Führung der Kegelhülse am Futterkörper durch den Gewindering nur unvollständig ausgenutzt werden kann, da Ungenauigkeiten in der Gewindeverbindung zwischen der Spannhülse und dem Gewindering auf die Führung der Spannhülse und der Gewindehülse durchschlagen. Die Montage des Kugellagers mittels des Gewinderings ist somit nur auf Kosten der Führungsgenauigkeit der Spannhülse am Futterkörper möglich.

Im übrigen sind beispielsweise aus der DE-B-1652739 selbstspannende Bohrfutter bekannt, bei welchen das Kugellager in einem Lagerkanal läuft, der durch am Futterkörper und an der Spannhülse vorgesehene, in der Zylinderfläche offene und einander radial gegenüberliegende Ringnuten gebildet ist, die sich gegenseitig zu dem Lagerkanal ergänzen. Die Kegelhülse ist hier durch ein Gewinde mit der Spannhülse verbunden, so daß die zweiteilige Ausbildung von Spannhülse und Kegelhülse und das sie verbindende Gewinde die Führungsgenauigkeit gegenüber einer einteiligen Ausführungsform von Spannhülse und Kegelhülse beeinträchtigten. Die Führungsgenauigkeit bezüglich der Spannbacken wird im übrigen noch dadurch weiter verschlechtert, daß der Backenhalter durch ein Gewinde an den Spannbacken angreift, dessen Ungenauigkeiten ebenfalls voll zur Auswirkung kommen.

Der Erfindung liegt die Aufgabe zugrunde, ein selbstspannendes Bohrfutter der eingangs genannten Art so auszubilden, daß das die Spannhülse und den Futterkörper verbindende Kugellager eine hohe Führungsgenauigkeit für den Futterkörper und damit verbunden auch für die Spannbacken ergibt und dabei einen stoß- und schlagfreien Kugellauf gewährleistet.

Diese Aufgabe wird nach der Erfindung dadurch gelöst, daß die die Spannhülse am Futterkörper führende Zylinderfläche sich axial beidseits des Kugellagers erstreckt, wobei zur Bildung des Kugellagers am Futterkörper und an der Spannhülse in der Zylinderfläche offene, einander radial gegenüberliegende Ringnuten vorgesehen sind, die sich gegenseitig zu einem Lagerkanal ergänzen, in dem die Lagerkugeln umlaufen, und daß in der Spannhülse eine verschließbare radiale Füllöffnung vorgesehen ist, die im Lagerkanal mündet und durch die hindurch die Lagerkugeln in den Lagerkanal eingeführt werden können, wobei die Achse der Füllöffnung gegenüber der Achse des Lagerkanals zur Kegelhülse hin soweit versetzt ist, daß die Wandung der Füllöffnung auf der von der Kegelhülse abgewandten Seite die Wandung des Lagerkanals in einem Punkt schneidet, dessen Zentriwinkel im Lagerkanalquerschnitt mindestens 30° gegen die Futterachse beträgt.

Durch die erfindungsgemäße Ausführung der Lagerung der Spannhülse am Futterkörper wird nicht nur eine sehr genaue Führung der Spann- und Kegelhülse am Futterkörper erreicht, sondern der gegen die Lagerkugeln tragende Bereich der Wandung der Ringnut in der Spannhülse geht auch an der Füllöffnung ohne Unterbrechung, durch und gewährleistet einen über den gesamten Lagerumfang stoß- und schlagfreien Kugellauf.

Die hohe Führungsgenauigkeit der Spannhülse setzt sich unmittelbar über die Kegelhülse in eine entsprechend hohe Führungsgenauigkeit der Spannbacken fort. Auf diese Führungsgenauigkeit hat der Backenhalter keinen direkten Einfluß. Er trägt, da von der Spannhülse getrennt, selbst nichts zur Justierung der Kegelhülse bei, sondern erfährt umgekehrt seine Ausrichtung an der Spann- und an der Kegelhülse, wozu es sich empfiehlt, daß der Backenhalter an der Zylinderfläche der Spannhülse zentriert ist und unter dem Druck der ihn gegen den Futterkörper abstützenden Federkraft mit einer äußeren Kegelfläche der inneren Kegelfläche der Kegelhülse aufsitzt. Zweckmäßig besitzen der Backenhalter und die Spannhülse einander radial gegenüberliegende Aussparungen, die gemeinsam ein den Backenhalter und die Spannhülse gegen Relativverdrehungen verriegelndes Sicherungsglied aufnehmen, wobei das Sicherungsglied axial in zumindest einer der Aussparungen ausreichend großes freies Spiel besitzt, um die axiale Verschieblichkeit des Backenhalters gegenüber der Spannhülse, der Kegelhülse und dem Futterkörper zu ermöglichen.

Um den Übertritt der Lagerkugeln aus der Füllöffnung in den Lagerkanal zu erleichtern, ist zweckmäßig weiter vorgesehen, daß an der dem Schnittpunkt von Lagerkanal und Füllöffnung gegenüberliegenden Stelle des Lagerkanalquerschnitts die Wandung der im Futterkörper verlaufenden Ringnut in einer geneigt zur Füllöffnung hin auslaufenden Zylinderfläche vertieft ist, wobei der Radius dieser Zylinderfläche mindestens gleich dem der Lagerkugeln ist. Dann sind die Lagernuten vorzugsweise von halbkreisförmigem Querschnitt mit einem Kreisradius von mindestens gleich dem Radius der Lagerkugeln.

Im folgenden wird die Erfindung an einem in der Zeichnung dargstellten Ausführungsbeispiel näher erläutert ; es zeigen :

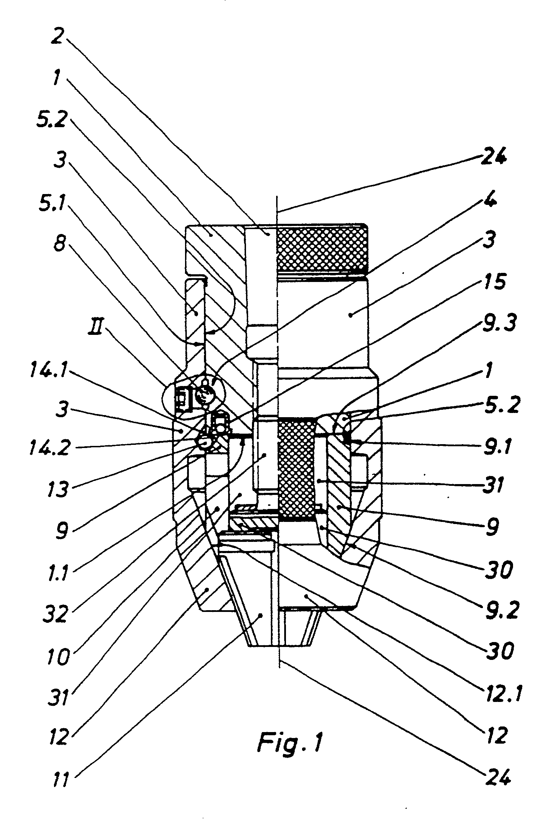

Fig. 1    ein Bohrfutter nach der Erfindung teils in Seitenansicht, teils im Axialschnitt,

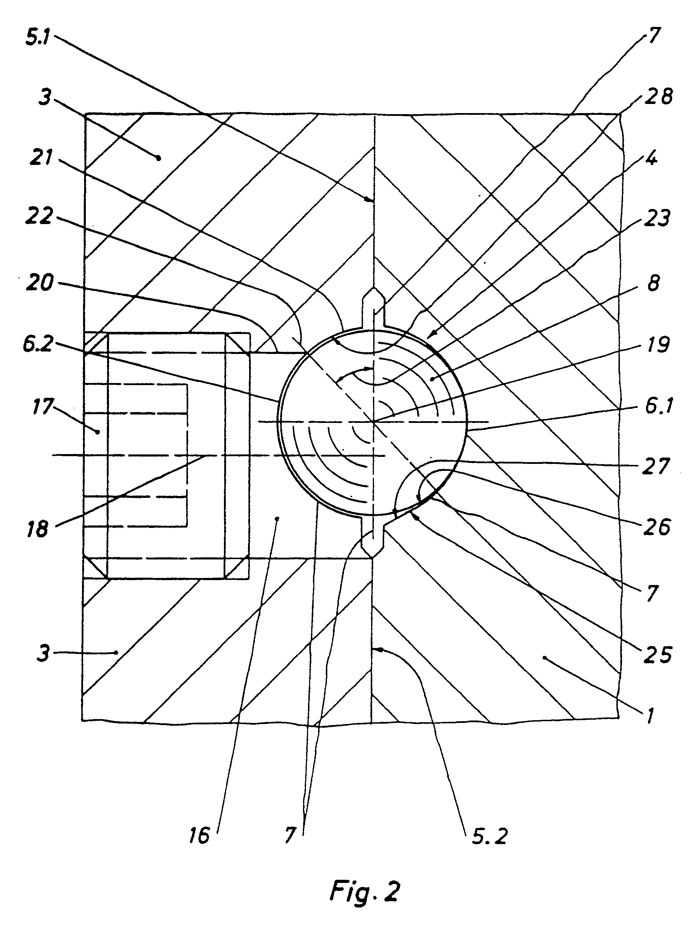

Fig. 2    das in Fig. 1 mit II bezeichnete Detail in vergrößerter Darstellung.

In der Zeichnung ist der Futterkörper mit 1 bezeichnet. Er besitzt eine Aufnahme 2 zum Anschluß an eine selbst nicht dargestellte Bohrspindel. Eine Spannhülse 3 ist mnttels eines Kugellagers 4 drehbar und axial unverschiebbar am Futterkörper 1 gehalten und in einer sich axial beidseits des Kugellagers 4 erstreckenden Zylinderfläche 5.1, 5.2 am Futterkörper 1 geführt, wobei die Zylinderfläche am Futterkörper 1 mit 5.1, die Zylinderfläche an der Spannhülse 3 mit 5.2 bezeichnet ist. Zur Bildung des Kugellagers 4 befinden sich am Futterkörper 1 und an der Spannhülse 3 jeweils inder Zylinderfläche 5.1, 5.2 offene, einander radial gegenüberliegende Ringnuten 6.1, 6.2, die sich gegenseitig zu einem Lagerkanal 7 ergänzen, in dem die Lagerkugeln 8 umlaufen und Spannhülse 3 und Futterkörper 1 axial gegeneinander abstützen. Ferner ist ein Backenhalter 9 vorgesehen, der im wesentlichen als radiale Schlitze ausgebildete Ausnehmungen 10 aufweist, in welchen radial und axial verschiebbare Spannbacken 11 angeordnet sind. Die Spannbacken 11 sind an der radial inneren Kegelfläche 12.1 einer Kegelhülse 12 geführt, die den sich mit der Spannhülse 3 drehenden Backenhalter 9 aufnimmt. Die Spannhülse 3 und die Kegelhülse 12 sind miteinander einstückig ausgebildet. Die Zylinderfläche 5.2 an der Spannhülse 3 ist über das spannbackenseitige Ende des Futterkörpers 1 hinaus verlängert. Innerhalb dieser Zylinderfläche 5.2 liegt der Backenhalter 9, der mit seinem äußeren Umriß im Ergebnis nirgends radial über die Zylinderfläche 5.1 bzw 5.2 nach außen vorsteht, so daß er axial in die Spannhülse 3 von deren hinterer Öffnung aus bis zur Kegelfläche 12.1 der Kegelhülse 12 eingeschoben werden kann. Der Backenhalter 9 ist gegenüber der Spannhülse 3 und dem Futterkörper 1 axial verschieblich angeordnet und federnd gegen den Futterkörper 1 abgestützt. Im einzelnen ist er an der Zylinderfläche 5.2 der Spannhülse 3 mit einer entsprechenden äußeren Zylinderfläche 9.1 zentriert und sitzt unter dem Druck der ihn gegen den Futterkörper 1 abstützenden Federkraft mit einer äußeren Kegelfläche 9.2 der inneren Kegelfläche 12.1 der Kegelhülse 12 auf. Die drehschlüssige Verbindung zwischen der Spannhülse 3 und dem Backenhalter 9 wird im Ausführungsbeispiel durch mindestens ein als Kugel ausgebildetes Sicherungsglied 13 erzeugt, das in Aussparungen 14.1, 14.2 eingelegt ist, die im Backenhalter 9 und in der Spannhülse 3 einander radial gegenüberliegend angeordnet sind. Die Aussparung 14.2 am Backenhalter 9 ist axial zum Futterkörper 1 hin offen, so daß das Sicherungsglied 13 die axiale Beweglichkeit des Backenhalters 9 nicht beeinträchtigt. Die den Backenhalter 9 gegen die Kegelfläche 12.1 drückende Federkraft 15 wird von Federgliedern 15 erzeugt, die im Futterkörper 1 an der dem Backenhalter 9 zugewandten Stirnfläche 1.1 angeordnet sind. Von diesen Federgliedern 15 ist in der Zeichnung nur eines andeutungsweise dargestellt. Es besteht aus einer in den Futterkörper 1 eingelassenen Büchse, die an ihrem offenen Ende eine zum Backenhalter 9 hin vorstehende Kugel enthält, welche unter der Kraft einer in der Zeichnung der besseren Übersichtlichkeit wegen nicht dargestellten vorgespannten Feder steht. Die Kugeln der Federglieder 15 stützen sich gegen die dem Futterkörper 1 zugewandte ringförmige Stirnfläche 9.3 des Backenhalters 9 ab.

Im Zusammenhang mit dem Kugellager 4 ist in der Spannhülse 3 eine mit einem Gewindestopfen 17 verschließbare radiale Füllöffnung 16 vorgesehen, die im Lagerkanal 7 mündet und durch die hindurch die Lagerkugeln 8 in den Lagerkanal 7 eingeführt werden können. Die Achse 18 dieser Füllöffnung 16 ist gegenüber der Achse 19 des Lagerkanals 7 zur Kegelhülse 12 hin soweit axial versetzt, daß die Wandung 20 der Füllöffnung 16 auf der von der Kegelhülse 12 abgewandten Seite die Wandung 21 des Lagerkanals 6.2 in einem Punkt 22 schneidet, dessen Zentriwinkel 23 im Lagerkanalquerschnitt mindestens 30° gegen die Futterachse 24 beträgt. An der diesem Schnittpunkt 22 gegenüberliegenden Stelle 25 des Lagerkanalquerschnitts ist die Wandung 26 der im Futterkörper 1 verlaufenden Ringnut 6.1 in einer geneigt zur Füllöffnung 16 hin auslaufenden Zylinderfläche 27 vertieft. Der Radius dieser Zylinderfläche 28 ist mindestens gleich dem der Lagerkugeln 8, so daß die Lagerkugeln 8 ohne Zwang aus der Füllöffnung 16 in den Lagerkanal 7 und umgekehrt übertreten können. Die Lagernuten 6.1, 6.2 können unter diesen Umständen, wie in der Zeichnung dargestellt, halbkreisförmigen Querschnitt mit einem Kreisradius von mindestens gleich dem Radius der Lagerkugeln 8 aufweisen. Die beschriebene Versetzung der Füllöffnung 16 gegenüber dem Lagerkanal 7 hat zur Folge, daß der die axiale Last zwischen dem Futterkörper 1 und der Spannhülse 3 hauptsächlich übertragende Bereich 28 der Ringnutwandung 21 an der Spannhülse 3 ohne Unterbrechung an der Füllöffnung 16 durchgeht, so daß ein auch unter Last stoß- und schlagfreier Kugellauf gewährleistet ist.

Die Spannbacken 11 sind zu ihrer Verstellung axial gegen ein Mitnehmerstück 30 abgestützt, wobei diese Abstützung so ausgebildet ist, daß Verdrehungen des Mitnehmerstücks 30 gegenüber den Spannbacken 11 und der Kegelhülse 12 bzw. Spannhülse 3 unmöglich sind. Im Ausführungsbeispiel wird dies dadurch erreicht, daß die Spannbacken 11 am Mitnehmerstück 30 in dort radial verlaufenden Nuten geführt sind. Das Mitnehmerstück 30 ist in einer zentralen Ausnehmung 31 des Backenhalters 9 axial verstellbar. Dazu ist es mit einem zur Futterachse 24 koaxialen Spannzapfen 32, der ein Außengewinde trägt, in einem Muttergewinde des Futterkörpers 1 verdrehbar. Wird die Spannhülse 3 gegenüber dem Futterkörper 1 verdreht, so erfährt der sich dann über die Kegelhülse 12 die Spannbacken 11 und den Backenhalter 9 entsprechend mitdrehende Spannzapfen 32 des Mitnehmerstücks 30 je nach Drehrichtung im Muttergewinde eine axiale Voroder Rückverstellung, was im ersten Fall ein Spannen, im zweiten Fall ein Lösen der Spannbacken 11 am Bohrwerkzeug zur Folge hat. Die sich dabei zwischen dem Futterkörper 1 einerseits und der Spannhülse 3 andererseits aufbauenden Spann- bzw. Nachspannkräfte werden axial über das Kugellager 4 übertragen.

## Patentansprüche

1. Selbstspannendes Bohrfutter mit einem zum Anschluß an eine Bohrspindel eingerichteten Futterkörper (1), mit einer Spannhülse (3), die mittels eines Kugellagers (4) drehbar und axial unverschiebbar am Futterkörper (1) gehalten und in einer Zylinderfläche (5.1, 5.2) am Futterkörper (1) geführt ist, ferner mit einem Backenhalter (9) und mit in Ausnehmungen (10) des Backenhalters radial und axial verschiebbar angeordneten Spannbacken (11), die an der radial inneren Kegelfläche (12.1) einer Kegelhülse (12) geführt sind, welche starr an der Spannhülse (3) angeordnet ist und den sich mit der Spannhülse (3) drehenden Backenhalter (9) aufnimmt, wobei die Spannhülse (3) und die Kegelhülse (12) miteinander einstückig ausgebildet sind und der innerhalb der an der Spannhülse (3) axial über den Futterkörper (1) verlängerten Zylinderfläche (5.2) liegende Backenhalter (9) gegenüber der Spannhülse (3) und dem Futterkörper (1) axial verschieblich angeordnet und federnd gegen den Futterkörper (1) abgestützt ist, dadurch gekennzeichnet, daß die die Spannhülse (3) am Futterkörper (1) führende Zylinderfläche (5.1, 5.2) sich axial beidseits des Kugellagers (4) erstreckt, wobei zur Bildung des Kugellagers (4) am Futterkörper (1) und an der Spannhülse (3) in der Zylinderfläche (5.1, 5.2) offene, einander radial gegenüberliegende Ringnuten (6.1, 6.2) vorgesehen sind, die sich gegenseitig zu einem Lagerkanal (7) ergänzen, in dem die Lagerkugeln (8) umlaufen, und daß in der Spannhülse (3) eine verschließbare radiale Füllöffnung (16) vorgesehen ist, die im Lagerkanal (7) mündet und durch die hindurch die Lagerkugeln (8) in den Lagerkanal (7) eingeführt werden können, wobei die Achse (18) der Füllöffnung (16) gegenüber der Achse (19) des Lagerkanals (7) zur Kegelhülse (12) hin so weit versetzt ist, daß die Wandung (20) der Füllöffnung (16) auf der von der Kegelhülse (12) abgewandten Seite die Wandung (21) des Lagerkanals (7) in einem Punkt (22) schneidet, dessen Zentriwinkel (23) im Lagerkanalquerschnitt mindestens 30° gegen die Futterachse (24) beträgt.

2. Bohrfutter nach Anspruch 1, dadurch gekennzeichnet, daß der Backenhalter (9) an der Zylinderfläche (5.2) der Spannhülse (3) zentriert ist und unter dem Druck der ihn gegen den Futterkörper (1) abstützenden Federkraft mit einer äußeren Kegelfläche (9.2) der inneren Kegelfläche (12.1) der Kegelhülse (12) aufsitzt.

3. Bohrfutter nach Anspruch 1 oder 2, dadurch gekennzeichnet, daß der Backenhalter (9) und die Spannhülse (3) einander radial gegenüberliegende Aussparungen (14.1, 14.2) aufweisen, die gemeinsam ein den Backenhalter (9) und die Spannhülse (3) gegen Relativverdrehungen verriegelndes Sicherungsglied (13) aufnehmen.

4. Bohrfutter nach Anspruch 1, dadurch gekennzeichnet, daß an der dem Schnittpunkt (22) gegenüberliegenden Stelle (25) des Lagerkanalquerschnitts die Wandung (26) der im Futterkörper (1) verlaufenden Ringnut (6.1) in einer geneigt zur Füllöffnung (16) hin auslaufenden Zylinderfläche (27) vertieft ist, wobei der Radius dieser Zylinderfläche (27) mindestens gleich dem der Lagerkugeln (8) ist.

5. Bohrfutter nach Anspruch 4, dadurch gekennzeichnet, daß die Lagernuten (6.1, 6.2) halbkreisförmigen Querschnitt mit einem Kreisradius von mindestens gleich dem Radius der Lagerkugeln (8) aufweisen.

## Revendications

1. Mandrin de serrage automatique comportant un corps (1) agencé pour être raccordé à une broche de perçage, une douille de serrage (3), qui est maintenue sur le corps (1) du mandrin de manière à pouvoir tourner, sans possibilité de déplacement axial, au moyen d'un roulement à billes (4) et est guidée le long d'une surface

EP 0 316 522 B1

cylindrique (5.1, 5.2) présente sur le corps (1) du mandrin, et en outre un porte-mâchoires (9) et des mâchoires de serrage (11), qui sont disposées de manière à être déplaçables radialement et axialement dans des évidements (10) du porte-mâchoires et sont guidées le long d'une surface conique (12.1), intérieure du point de vue radial, d'une douille conique (12) qui est montée rigidement sur la douille de serrage (3) et loge le porte-mâchoires (9) qui tourne avec la douille de serrage (3), et dans lequel la douille de serrage (3) et la douille conique (12) sont agencées de manière à être réunies entre elles d'un seul tenant et le porte-mâchoires (9) disposé à l'intérieur de la surface cylindrique (5.2), qui se prolonge axialement sur la douille de serrage (3) au-delà du corps (1) du mandrin, est disposé de manière à être déplaçable axialement par rapport à la douille de serrage (3) et au corps (1) du mandrin et est supporté élastiquement par le corps (1) du mandrin, caractérisé en ce que la surface cylindrique (5.1, 5.2), qui guide la douille de serrage (3) sur le corps (1) du mandrin, s'étend axialement des deux côtés du roulement à billes (4), et pour la formation du roulement à billes (4), il est prévu, sur le corps (1) du mandrin et sur la douille de serrage (3), des gorges annulaires (6.1, 6.2), qui s'ouvrent dans la surface radiale (5.1, 5.2), sont réciproquement opposées dans le sens radial et se complètent pour former un canal (7) de roulement, dans lequel circulent les billes (8) du roulement, et que dans la douille de serrage (3) est prévue une ouverture radiale de remplissage (16), qui peut être fermée et débouche dans le canal (7) du roulement et au moyen de laquelle les billes (8) du roulement peuvent être introduites dans le canal (7) du roulement, l'axe (18) de l'ouverture de remplissage étant décalé suffisamment par rapport à l'axe (19) du canal (7) du roulement en direction de la douille conique pour que la paroi (20) de l'ouverture de remplissage (16) recoupe, sur le côté tourné à l'opposé de la douille conique (12), la paroi (21) du canal (7) du roulement en un point (22), dont l'angle au centre (23) dans la section transversale du canal du roulement par rapport à l'axe (24) du mandrin est égal à au moins 30°.

2. Mandrin selon la revendication 1, caractérisé en ce que le porte-mâchoires (9) est centré sur la surface cylindrique (5.2) de la douille de serrage (3) et, sous l'effet de la pression de la force d'un ressort le repoussant contre le corps (1) du mandrin, prend appui par sa surface conique extérieure (9.2) contre la surface extérieure (12.1) de la douille conique (12).

3. Mandrin selon la revendication 1 ou 2, caractérisé en ce que le porte-mâchoires (9) et la douille de serrage (3) possèdent des évidements (14.1, 14.2) qui sont opposés radialement et bloquent en commun un organe de blocage (13) qui bloque le porte-mâchoires (9) et la douille de serrage (3) contre toute rotation réciproque.

4. Mandrin selon la revendication 1, caractérisé en ce qu'à l'emplacement (25), situé à l'opposé du point d'intersection (22), de la section transversale du canal du roulement, la paroi (26) de la gorge annulaire (6.1) qui s'étend dans le corps (1) du mandrin, est en renfoncement dans une surface cylindrique (27) qui s'étend obliquement en direction de l'ouverture de remplissage (16), le rayon de cette surface cylindrique (27) étant au moins égal à celui des billes (8) du roulement.

5. Mandrin selon la revendication 4, caractérisé en ce que les gorges (6.1, 6.2) du roulement possèdent une section transversale de forme semi-circulaire possédant un rayon au moins égal au rayon des billes (8) du roulement.

## Claims

1. Self-chucking drill chuck with a chuck body (1) adjusted for joining to a drill spindle, having a clamping sleeve (3), which is held by means of a ball bearing (4) rotatably and axially indisplaceably on the chuck body (1) and is guided in a cylinder face (5.1, 5.2) on the chuck body (1), further having a jaw holder (9) and chuck jaws (11), which are mounted axially and radially displaceably in recesses (10) in the jaw holder and which are guided on the radially inner conical face (12.1) of a conical sleeve (12), which is mounted rigidly on the clamping sleeve (3) and receives the jaw holder (9) rotating with the clamping sleeve (3), in which case the clamping sleeve (3) and the conical sleeve (12) are formed integrally with one another, and the jaw holder (9) lying inside the cylinder face (5.2) extended axially over the chuck body (1) on the clamping sleeve (3) is mounted axially slidably relative to the clamping sleeve (3) and the chuck body (1) and is supported elastically against the chuck body (1), characterised in that the cylinder face (5.1, 5.2) guiding the clamping sleeve (3) on the chuck body (1) extends axially on both sides of the ball bearing (4), and to form the ball bearing (4) open annular grooves (6.1, 6.2) are provided axially opposite one another in the cylinder face (5.1, 5.2) on the chuck body (1) and on the clamping sleeve (3) and complement one another to form a bearing channel (7), in which the bearing balls (8) revolve, and in that in the clamping sleeve (3) a sealable, radial filling aperture (16) is provided, which opens into the bearing channel (7) and can be inserted through the bearing balls (8) into the bearing channel (7), in which case the axis (18) of the filling aperture (16) relative to the axis (19) of the bearing channel (7) is offset relative to the conical sleeve (12) sufficiently far that, on the side remote from the conical sleeve (12),

5

the wall (20) of the filling aperture (16) intersects the wall (21) of the bearing channel (7) at a point (22) whose centre square (23) in the bearing channel cross-section is at least 30° from the chuck axis (24).

2. Drill chuck according to claim 1, characterised in that the jaw holder (9) is centred on the cylinder face (5.2) of the clamping sleeve (3) and rests, under the pressure of the spring force supporting it against the chuck body (1), with an outer conical face (9.2) on the inner conical face (12.1) of the conical sleeve (12).

3. Drill chuck according to claim 1 or 2, characterised in that the jaw holder (9) and the clamping sleeve (3) have radially opposite recesses (14.1, 14.2), which together receive a fixing member (13), which locks the jaw holder (9) and the clamping sleeve (3) against relative rotations.

4. Drill chuck according to claim 1, characterised in that at the point (25) of the bearing channel cross-section opposite the point of intersection (22), the wall (26) of the annular groove (6.1) extending in the chuck body (1) is hollowed in a cylinder face (27) sloping towards the filling aperture (16), the radius of this cylinder face (27) being at least equal to that of the bearing balls (8).

5. Drill chuck according to claim 4, characterised in that the bearing grooves (6.1, 6.2) have a semicircular cross-section with a circle radius at least equal to the radius of the bearing balls (8).

Fig.1

*Fig. 2*